(19) Europäisches Patentamt
European Patent Office
Office européen des brevets

(11) **EP 3 011 673 B1**

## (12) EUROPÄISCHE PATENTSCHRIFT

(45) Veröffentlichungstag und Bekanntmachung des Hinweises auf die Patenterteilung:
**27.06.2018 Patentblatt 2018/26**

(21) Anmeldenummer: **13765657.5**

(22) Anmeldetag: **15.08.2013**

(51) Int Cl.:
*H02M 7/483* (2007.01)       *H02M 1/08* (2006.01)

(86) Internationale Anmeldenummer:
**PCT/EP2013/067078**

(87) Internationale Veröffentlichungsnummer:
**WO 2015/022030 (19.02.2015 Gazette 2015/07)**

### (54) **MULTILEVELUMRICHTER**

MULTILEVEL CONVERTER

VARIATEUR À PLUSIEURS NIVEAUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**27.04.2016 Patentblatt 2016/17**

(73) Patentinhaber: **Siemens Aktiengesellschaft 80333 München (DE)**

(72) Erfinder: **ECKEL, Hans-Günter 18059 Rostock (DE)**

(56) Entgegenhaltungen:
**WO-A1-2012/087895**

- **MARCOS BALDUINO DE ALVARENGA ET AL: "Modulation strategy for minimizing commutations and capacitor voltage balancing in symmetrical cascaded multilevel converters", INDUSTRIAL ELECTRONICS (ISIE), 2011 IEEE INTERNATIONAL SYMPOSIUM ON, IEEE, 27. Juni 2011 (2011-06-27), Seiten 1875-1880, XP032019326, DOI: 10.1109/ISIE.2011.5984443 ISBN: 978-1-4244-9310-4**
- **RAINER MARQUARDT ET AL: "Modulares Stromrichterkonzept für Netzkupplungsanwendungen bei hohen Spannungen", BAUELEMENTE DER LEISTUNGSELEKTRONIK UND IHRE ANWENDUNGEN: VORTRÄGE DER ETG-FACHTAGUNG, 23-24 APRIL 2002, BAD NAUHEIM, KURHAUS, VDE-VERLAG, BERLIN, 1. Januar 2002 (2002-01-01), Seiten 155-161, XP008105719, ISBN: 978-3-8007-2690-5**

EP 3 011 673 B1

**Beschreibung**

Die Erfindung bezieht sich auf einen Multilevelumrichter mit den Merkmalen gemäß dem Oberbegriff des Patentanspruchs 1.

Ein derartiger Multilevelumrichter wird in den Konferenzbeiträgen "Modulares Stromrichterkonzept für Netzkupplungsanwendungen bei hohen Spannungen" (Rainer Marquardt, Anton Lesnicar und Jürgen Hildinger, Institut für elektrische Antriebstechnik, Leistungselektronik und Steuerungen der Universität der Bundeswehr München, ETG Fachtagung Bauelemente der Leistungselektronik und ihre Anwendungen, 2002, Bad Nauheim) und "Modulares Stromrichterkonzept für Netzkupplungsanwendungen bei hohen Spannungen" (K. Marquardt et al., Vorträge der ETG-Fachtagung, 2002) beschrieben. Der vorbekannte Multilevelumrichter ist mit einer Mehrzahl an in Reihe geschalteten Submodulen ausgestattet, die jeweils einen ersten Schalter, einen zweiten Schalter und einen Kondensator aufweisen und in Entladephasen mittels des Kondensators Strom nach außen abgeben und in Ladephasen Strom zum Aufladen des Kondensators aufnehmen. Eine Zentraleinrichtung dient zur Steuerung der Arbeitsweise des Multilevelumrichters.

Aus der Druckschrift "Modulation Strategy for Minimizing Commutations and Capacitor Voltage Balancing in Symmetrical Cascaded Multilevel Converters" von Balaudino de Alvarenga et al., IEEE 2011, ist ferner ein Umrichter in Vollbrückentopologie bekannt, bei dem der Zustandswechsel eines Vollbrücken-Submoduls mittels einer geeigneten Steuerung verzögert wird, um die Häufigkeit der Zustandswechsel und damit die Verluste zu minimieren.

Der Erfindung liegt die Aufgabe zugrunde, einen Multilevelumrichter anzugeben, der einen besonders einfachen Aufbau aufweist, aber dennoch eine genaue Steuerung ermöglicht.

Diese Aufgabe wird erfindungsgemäß durch einen Multilevelumrichter mit den Merkmalen gemäß Patentanspruch 1 gelöst. Vorteilhafte Ausgestaltungen des erfindungsgemäßen Multilevelumrichters sind in Unteransprüchen angegeben.

Danach ist erfindungsgemäß vorgesehen, dass mindestens zwei der Submodule unter Bildung eines Multimoduls in Reihe geschaltet sind, wobei in den Ladephasen und den Entladephasen des Multimoduls jeweils einer der Schalter eines jeden Submoduls ausgeschaltet und der jeweils andere Schalter eines jeden Submoduls eingeschaltet ist, und das Multimodul eine mit der Zentraleinrichtung in Verbindung stehende Steuereinrichtung aufweist, die die Steuerung der Submodule des Multimoduls gemäß Steuersignalen der Zentraleinrichtung vornimmt, wobei die Steuereinrichtung derart ausgestaltet ist, dass sie die Kondensatorspannungen der Submodule überwacht und im Falle einer Asymmetrie der Kondensatorspannungen eine Symmetrierung dadurch hervorruft, dass sie bei Submodulen mit einer - verglichen mit der Kondensatorspannung der übrigen Submodule des Multimoduls - zu geringen Kondensatorspannung jeweils mindestens eine Verriegelungsphase vorsieht, in der der erste und der zweite Schalter gleichzeitig abgeschaltet sind.

Ein wesentlicher Vorteil des erfindungsgemäßen Multilevelumrichters ist darin zu sehen, dass eine Ansteuerung der Submodule nicht für alle Submodule individuell durch die Zentraleinrichtung selbst erfolgen muss, sondern stattdessen über zwischengeschaltete Steuereinrichtungen in den jeweiligen Multimodulen erfolgen kann. Aufgrund der Zuordnung von Submodulen zu Multimodulen wird die Zentraleinrichtung von Steueraufgaben entlastet. Außerdem lässt sich die Anzahl der Steuerleitungen reduzieren, weil nicht mehr jedes Submodul mit der Zentraleinrichtung unmittelbar verbunden sein muss. Der Aufbau des erfindungsgemäßen Multilevelumrichters wird somit einfacher als der Aufbau bei vorbekannten Multilevelumrichtern; demgemäß sinken die Herstellungskosten.

Ein weiterer wesentlicher Vorteil des erfindungsgemäßen Multilevelumrichters ist darin zu sehen, dass bei diesem in sehr einfacher Weise ein Symmetrieren der Kondensatorspannungen der in den Multimodulen zusammengefassten Submodule erfolgen kann, weil das Symmetrieren in den erfindungsgemäßen Verriegelungsphasen unabhängig von der Stromrichtung des durch das Multimodul bzw. dessen Submodule fließenden Modulstromes automatisch erfolgt; denn bei Submodulen, die sich in einer Verriegelungsphase befinden, kann lediglich ein Aufladen der Kondensatoren erfolgen, jedoch kein Entladen. Zum Symmetrieren muss die Stromrichtung des Modulstromes also weder bekannt sein noch gemessen werden; es reicht vielmehr aus, die erfindungsgemäßen Verriegelungsphasen bei Submodulen mit zu geringer Kondensatorspannung vorzusehen. Mit anderen Worten erfolgt ein Symmetrieren dadurch, dass bei Submodulen mit ausreichender Zwischenkreisspannung ein Entladen des Kondensators erlaubt wird, bei Submodulen mit zu geringer Zwischenkreisspannung ein Entladen des Kondensators in den Verriegelungsphasen blockiert wird.

Als vorteilhaft wird es angesehen, wenn die Steuereinrichtung für jedes Submodul die Abweichung der Kondensatorspannung von dem Mittelwert der Kondensatorspannungen der Submodule des Multimoduls ermittelt und im Falle, dass die Abweichung einen vorgegebenen Schwellenwert überschreitet, für das jeweilige Submodul jeweils mindestens eine Verriegelungsphase vorsieht.

Vorzugsweise legt die Steuereinrichtung die zeitliche Länge der Verriegelungsphase submodulindividuell in Abhängigkeit von der Asymmetrie der Kondensatorspannungen fest.

Besonders vorteilhaft ist es, wenn die Steuereinrichtung für jedes Submodul die Abweichung der Kondensatorspannung von dem Mittelwert der Kondensatorspannungen der Submodule des Multimoduls ermittelt und die zeitliche Länge der Verriegelungsphase submodulindividuell in Abhängigkeit von der jeweiligen Abweichung der Kondensatorspannung vom Mittelwert festlegt, wobei die jeweilige zeitliche Länge der Verriegelungsphasen umso größer ist, je größer die jeweilige Abweichung der Kondensatorspannung vom Mittelwert ist.

Besonders vorteilhaft ist es, wenn die Steuereinrichtung derart ausgestaltet ist, dass sie Verriegelungsphasen jeweils dann auslöst, wenn sie von der Zentraleinrichtung ein Steuersignal zum Umschalten des ersten und des zweiten Schalters der Submodule erhält.

Vorzugsweise ist der erste Schalter eines jeden Submoduls mit dem Kondensator in Reihe geschaltet, und der zweite Schalter liegt bevorzugt elektrisch parallel zu der Reihenschaltung aus Kondensator und erstem Schalter.

Hinsichtlich der zeitlichen Platzierung von Verriegelungsphasen wird es als vorteilhaft angesehen, wenn die Steuereinrichtung derart ausgestaltet ist, dass sie die Verriegelungsphasen jeweils einfügt, wenn der zweite Schalter ausgeschaltet ist oder gemäß Steuersignal der Zentraleinrichtung ausgeschaltet werden soll, und das Einfügen der Verriegelungsphasen auf Kosten der Einschaltzeit des ersten Schalters durchgeführt wird.

Besonders vorteilhaft ist es, wenn die Verkürzung der Einschaltzeit des ersten Schalters symmetrisch zur Ausschaltzeit des zweiten Schalters erfolgt, damit die Mittelachse der Ausgangsspannungspulse bestehen bleibt. Eine solche Symmetrierung lässt sich in vorteilhafter Weise erreichen, wenn die Länge der Verriegelungsphase vor dem Einschalten des ersten Schalters genauso groß ist wie die zeitliche Länge der Verriegelungsphase nach dem Wiederausschalten des ersten Schalters und dem korrespondierenden Einschalten des zweiten Schalters.

Vorzugsweise ist parallel zu dem ersten Schalter eine erste Diode und parallel zu dem zweiten Schalter eine zweite Diode geschaltet. Bevorzugt ist parallel zu dem Kondensator eine Reihenschaltung geschaltet, die eine erste und eine zweite Diode umfasst.

Hinsichtlich der Dioden wird es als vorteilhaft angesehen, wenn der Anodenanschluss der ersten Diode mit dem Kathodenanschluss der zweiten Diode verbunden ist und der Kathodenanschluss der ersten Diode mit einem Kondensatoranschluss des Kondensators und der Anodenanschluss der zweiten Diode mit dem anderen Kondensatoranschluss des Kondensators verbunden ist.

Die Erfindung bezieht sich darüber hinaus auf ein Verfahren zum Betreiben eines Multilevelumrichters mit einer Mehrzahl an in Reihe geschalteten Submodulen, die jeweils einen ersten Schalter, einen zweiten Schalter und einen Kondensator aufweisen und in Entladephasen mittels des Kondensators Strom nach außen abgeben und in Ladephasen Strom zum Aufladen des Kondensators aufnehmen.

Erfindungsgemäß ist bezüglich eines solchen Verfahrens vorgesehen, dass mindestens zwei der Submodule unter Bildung eines Multimoduls in Reihe geschaltet werden, wobei in den Ladephasen und den Entladephasen des Multimoduls jeweils einer der Schalter eines jeden Submoduls ausgeschaltet und der jeweils andere Schalter eines jeden Submoduls eingeschaltet wird, und die Kondensatorspannungen der Submodule überwacht werden und im Falle einer Asymmetrie der Kondensatorspannungen eine Symmetrierung hervorgerufen wird, indem bei Submodulen mit einer - verglichen mit der Kondensatorspannung der übrigen Submodule des Multimoduls - zu geringen Kondensatorspannung jeweils mindestens eine Verriegelungsphase vorgesehen wird, in der der erste und der zweite Schalter gleichzeitig ausgeschaltet werden.

Bezüglich der Vorteile des erfindungsgemäßen Verfahrens sei auf die obigen Ausführungen im Zusammenhang mit dem erfindungsgemäßen Multilevelumrichter verwiesen, da die obigen Ausführungen für das erfindungsgemäße Verfahren entsprechend gelten.

Vorzugsweise erfolgt die Verkürzung der Einschaltzeit des ersten Schalters symmetrisch zur zeitlichen Lage der Ausschaltzeit des zweiten Schalters.

Mit Blick auf eine symmetrische bzw. zentrierte zeitliche Lage der Einschaltzeit des ersten Schalters relativ zur Ausschaltzeit des zweiten Schalters des jeweiligen Submoduls wird es als vorteilhaft angesehen, wenn bei Submodulen mit einer - verglichen mit der Kondensatorspannung der übrigen Submodule des Multimoduls - zu geringen Kondensatorspannung jeweils zwei Verriegelungsphasen vorgesehen werden, in der der erste und der zweite Schalter gleichzeitig ausgeschaltet sind, wobei die beiden Verriegelungsphasen gleich lang sind und eine der Verriegelungsphasen in dem Zeitintervall nach dem Ausschalten des zweiten Schalters und vor dem Einschalten des ersten Schalters liegt und die andere Verriegelungsphase in dem Zeitintervall nach dem zeitlich nachfolgenden (Wieder)ausschalten des ersten Schalters und vor dem zeitlich nachfolgenden (Wieder)einschalten des zweites Schalters liegt.

Die Erfindung wird nachfolgend anhand von Ausführungsbeispielen näher erläutert; dabei zeigen beispielhaft:

Figur 1    ein Ausführungsbeispiel für einen erfindungsgemäßen Multilevelumrichter,

Figur 2    ein Ausführungsbeispiel für ein zwei Submodule umfassendes Multimodul für den Multilevelumrichter gemäß Figur 1 näher im Detail,

Figur 3    beispielhaft die Arbeitsweise des Multimoduls gemäß Figur 2 für den Fall, dass die Kondensatorspannungen der Kondensatoren der Submodule identisch oder zumindest näherungsweise identisch sind,

Figur 4    beispielhaft die Arbeitsweise des Multimoduls gemäß Figur 2 für den Fall einer Asymmetrie der Kondensatorspannungen und einer Angleichung der Kondensatorspannungen durch Vorsehen von Verriegelungsphasen,

Figur 5    beispielhaft den Stromfluss durch ein "verriegeltes" Submodul des Multimoduls gemäß Figur 2 während der Verriegelungszeit für den Fall eines positiven Modulstroms, durch den der Zwischenkreis des Submoduls aufgeladen wird,

Figur 6    den Stromfluss durch das "verriegelte" Submodul während der Verriegelungszeit für den Fall eines negativen Modulstroms,

Figur 7    zum Vergleich den Stromfluss durch das "entriegelte" Submodul während der normalen Einschaltzeit des ersten Schalters des Schaltmoduls für den Fall eines positiven Modulstroms und

Figur 8    zum Vergleich den Stromfluss durch das "entriegelte" Submodul während der normalen Einschaltzeit des ersten Schalters für den Fall eines negativen Modulstroms.

In den Figuren werden der Übersicht halber für identische oder vergleichbare Komponenten stets dieselben Bezugszeichen verwendet.

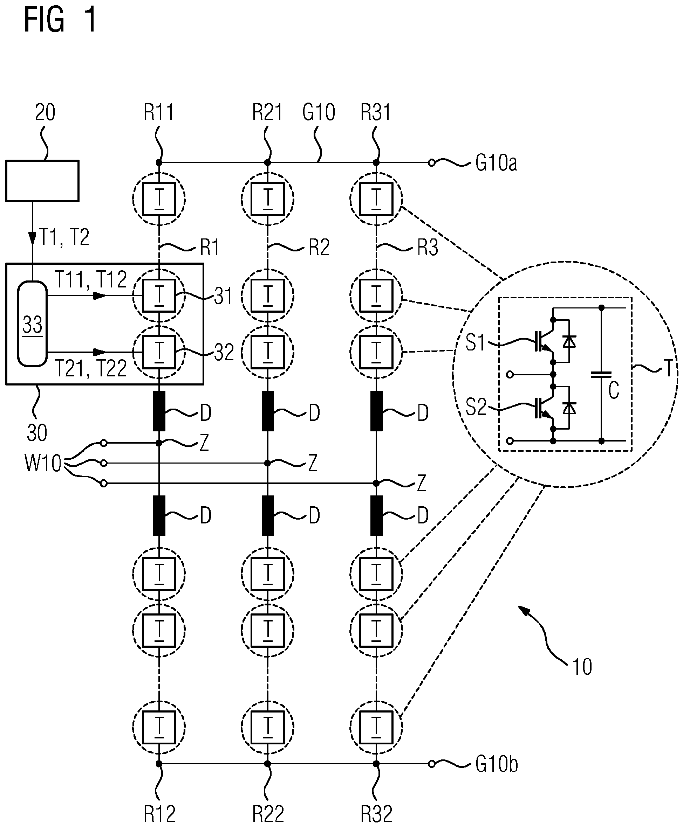

In der Figur 1 ist ein Ausführungsbeispiel für einen dreiphasigen Multilevelumrichter 10 gezeigt. Dieser umfasst Wechselspannungsanschlüsse W10 zum Einspeisen oder Ausspeisen bzw. Entnehmen von Wechselstrom. Darüber hinaus ist der Multilevelumrichter 10 mit zwei Spannungsanschlüssen G10a und G10b ausgestattet, an denen ein Gleichstrom oder ein zeitlich variabler Strom, insbesondere auch ein Wechselstrom, eingespeist oder entnommen werden kann; die Spannungsanschlüsse G10a und G10b werden nachfolgend beispielhaft als "Gleichspannungsanschlüsse" bezeichnet, obwohl - wie erwähnt - an diesen nicht zwingend nur Gleichstrom ein- oder ausgespeist werden muss.

Der Multilevelumrichter 10 weist drei parallel geschaltete Reihenschaltungen R1, R2 und R3 auf, deren äußere Anschlüsse R11, R21 und R31 mit dem Gleichspannungsanschluss G10a in Verbindung stehen. Die äußeren Anschlüsse R12, R22 und R32 sind mit dem Gleichspannungsanschluss G10b der Gleichspannungsseite G10 verbunden. Mit anderen Worten bilden also die äußeren Anschlüsse der drei Reihenschaltungen R1, R2 und R3 die Gleichspannungsseite des Multilevelumrichters 10.

Jede der drei Reihenschaltungen R1, R2 und R3 ist jeweils mit einer Vielzahl an in Reihe geschalteten Submodulen T sowie zwei Induktivitäten D ausgestattet. Jeweils zwischen den zwei Induktivitäten D befindet sich ein Zwischenanschluss Z, der potentialmäßig zwischen den in der Figur 1 oberen Submodulen und den in Figur 1 unteren Submodulen liegt und einen der drei Wechselspannungsanschlüsse W10 des Multilevelumrichters 10 bildet.

In der Figur 1 lässt sich darüber hinaus beispielhaft der Aufbau der Submodule T erkennen. Bei dem Ausführungsbeispiel gemäß Figur 1 weist jedes der Submodule T jeweils einen ersten Schalter (z. B in Form eines Transistors) S1, einen zweiten Schalter (z. B in Form eines Transistors) S2 und einen Kondensator C auf.

Die Ansteuerung der Submodule T erfolgt bei dem Multilevelumrichter 10 gemäß Figur 1 durch eine Zentraleinrichtung 20. Um zu vermeiden, dass die Zentraleinrichtung 20 mit jedem der Submodule T individuell verbunden sein muss, um eine Ansteuerung bewirken zu können, sind bei dem Ausführungsbeispiel gemäß Figur 1 einzelne oder alle Submodule T zu Multimodulen zusammengefasst.

Ein Ausführungsbeispiel für ein solches Multimodul ist in der Figur 1 mit dem Bezugszeichen 30 gekennzeichnet. Das Multimodul 30 umfasst zwei Submodule 31 und 32, die von einer multimodulindividuellen Steuereinrichtung 33 angesteuert werden.

Die Ansteuerung des Multimoduls 30 durch die Zentraleinrichtung 20 erfolgt mittels multimodulindividueller Steuersignale T1 und T2, von denen das Steuersignal T1 zur Ansteuerung des jeweils ersten Schalters der beiden Submodule 31 und 32 und das Steuersignal T2 zur Ansteuerung des jeweils zweiten Schalters der beiden Submodule 31 und 32 dient.

Die Steuerung des Multimoduls 30 durch die Zentraleinrichtung 20 erfolgt bevorzugt anhand der Multimodul-Zwischenkreisspannung, also der Spannungssumme, die durch die Zwischenkreisspannungen der einzelnen Submodule 31 und 32 des Multimoduls 30 gebildet wird. Mit anderen Worten benötigt die Zentraleinrichtung 20 zur Steuerung vorzugsweise nicht die einzelnen bzw. individuellen Kondensatorspannungen bzw. die individuellen Zwischenkreisspannungen der einzelnen Submodule 31 und 32, sondern pro Multimodul nur einen einzigen Spannungswert, wodurch die Zentraleinrichtung 20 entlastet wird.

Die Funktion der Steuereinrichtung 33 besteht darin, die Steuersignale T1 und T2 der Zentraleinrichtung 20 zu verarbeiten und mit den Steuersignalen T1 und T2 submodulindividuelle Steuersignale T11, T12, T21 und T22 zur Ansteuerung der Schalter der beiden Submodule 31 und 32 zu bilden.

Eine weitere Funktion der Steuereinrichtung 33 besteht darin, die Summe der Kondensatorspannungen der Kondensatoren der Submodule 31 und 32, also die Summe der einzelnen Zwischenkreisspannungen, zu bilden und diese Summe, also nicht die individuellen Kondensatorspannungen bzw. die individuellen Zwischenkreisspannungen der einzelnen Submodule, zu der Zentraleinrichtung 20 zu übersenden. Wie bereits erwähnt, erfolgt die Steuerung des Multimoduls 30 durch die Zentraleinrichtung 20 anhand der Multimodul-Zwischenkreisspannung.

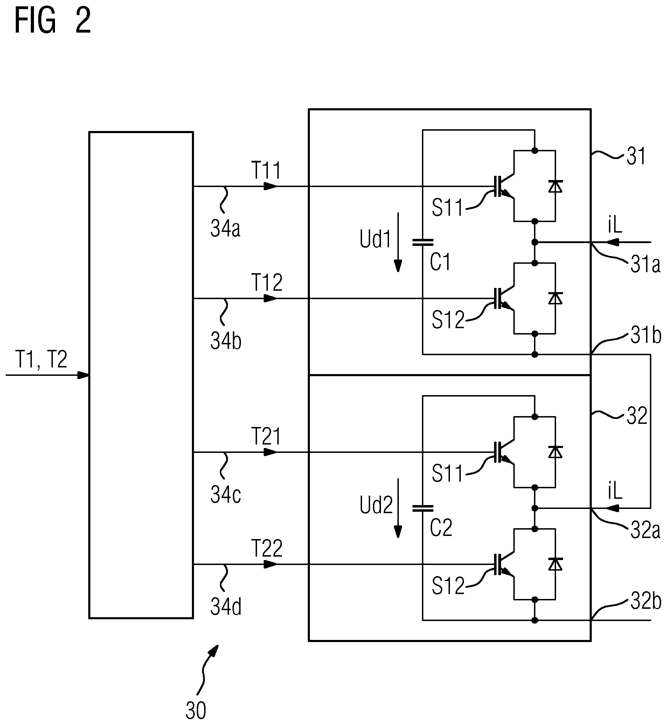

Die Figur 2 zeigt den Aufbau des Multimoduls 30 gemäß Figur 1 beispielhaft näher im Detail.

Das Submodul 31 des Multimoduls 30 umfasst einen ersten Schalter S11, der in Reihe mit einem Kondensator C1 liegt. Die Reihenschaltung aus dem ersten Schalter S11 und dem Kondensator C1 ist an Modulanschlüsse 31a und 31b des Submoduls 31 angeschlossen. Parallel zu der Reihenschaltung aus dem ersten Schalter S11 und dem Kondensator C1 liegt ein zweiter Schalter S12, der unmittelbar mit den beiden Modulanschlüssen 31a und 31b in Verbindung steht.

Der Aufbau des Submoduls 32 entspricht dem Aufbau des Submoduls 31. Ein erster Schalter S21 liegt in Reihe mit einem Kondensator C2, wobei die Reihenschaltung parallel zu einem zweiten Schalter S22 liegt. Die Anschlüsse des zweiten Schalters S22 bzw. die Anschlüsse der aus dem ersten Schalter S21 und dem Kondensator C2 gebildeten Reihenschaltung bilden die Modulanschlüsse 32a und 32b des Submoduls 32.

Zur Ansteuerung der Schalter der beiden Submodule 31 und 32 werden über Steuerleitungen 34a, 34b, 34c und 34d die Steuersignale T11, T12, T21 und T22 zu den vier Schaltern S11, S12, S21 und S22 übertragen.

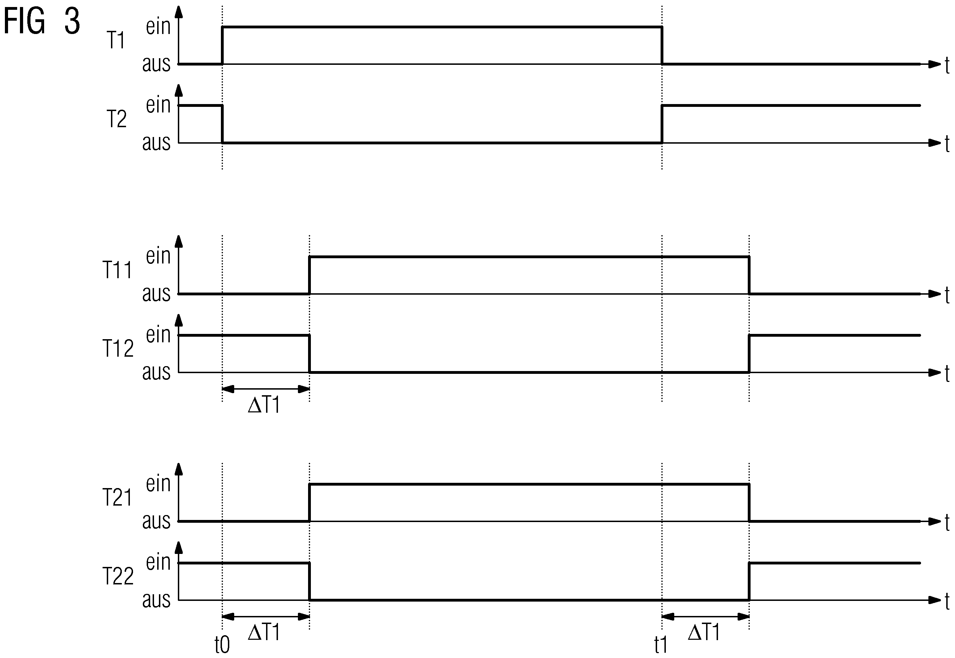

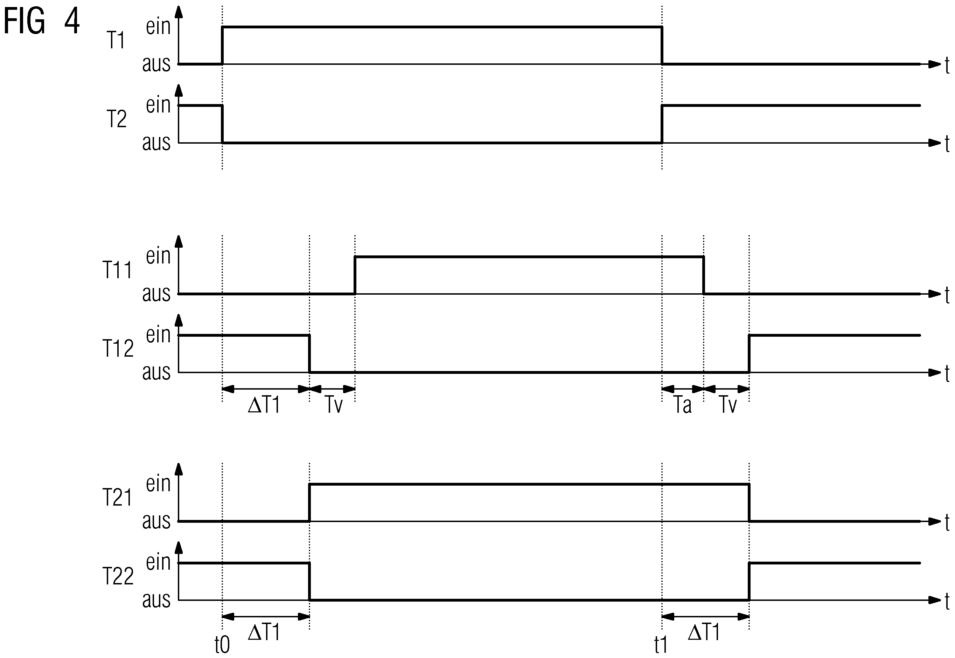

Die Arbeitsweise der Steuereinrichtung 33 in Abhängigkeit von den modulindividuellen Steuersignalen T1 und T2 der Zentraleinrichtung 20 wird nachfolgend anhand der Figuren 3 und 4 beispielhaft näher erläutert.

Die Figur 3 zeigt die Arbeitsweise der Steuereinrichtung 33 für den Fall, dass die Kondensatorspannungen Ud1 und Ud2 der beiden Kondensatoren C1 und C2 der beiden Submodule 31 und 32 identisch oder nahezu identisch sind. In einem solchen Fall werden die multimodulindividuellen Steuersignale T1 und T2 nach Ablauf einer vorgegebenen Verzögerungszeit $\Delta T1$ entsprechend umgesetzt. Man erkennt, dass - gemäß dem zum Zeitpunkt t0 eingehenden Umschaltbefehl der Zentraleinrichtung 20 - die beiden ersten Schalter S11 und S21 der beiden Submodule 31 und 32 (vgl. Figur 2) nach Ablauf der Verzögerungszeit $\Delta T1$ eingeschaltet werden. In entsprechender Weise erfolgt die Umsetzung des in Form des Steuersignals T2 zum Zeitpunkt t0 eingehenden Ausschaltbefehls für die beiden zweiten Schalter S12 und S22 der beiden Submodule 31 und 32 (vgl. Figur 2) nach Ablauf der Verzögerungszeit $\Delta T1$.

In analoger Weise erfolgt ein Umschalten der vier Schalter des Multimoduls 30, sobald von der Zentraleinrichtung 20 dem Multimodul 30 ein Umschaltbefehl zum Umschalten dieser vier Schalter durch einen Flankenwechsel der multimodulindividuellen Steuersignale T1 und T2 zum Zeitpunkt t1 übermittelt wird.

Die Figur 4 zeigt die Arbeitsweise der Steuereinrichtung 33 des Multimoduls 30 für den Fall, dass die Kondensatorspannungen Ud1 und Ud2 der beiden Kondensatoren C1 und C2 unterschiedlich groß bzw. asymmetrisch sind. Bei dem Ausführungsbeispiel gemäß Figur 4 wird beispielhaft davon ausgegangen, dass die Kondensatorspannung Ud1 kleiner ist als die Kondensatorspannung Ud2 ist und dass eine Angleichung der beiden Kondensatorspannungen Ud1 und Ud2 erfolgen soll.

Kommt es zum Zeitpunkt t0 zu einem Flankenwechsel der multimodulindividuellen Steuersignale T1 und T2 dergestalt, dass die beiden ersten Schalter S11 und S21 der beiden Multimodule 31 und 32 eingeschaltet und die beiden zweiten Schalter S12 und S22 der beiden Submodule 31 und 32 ausgeschaltet werden sollen, so erfolgt das Umsetzen dieses Umschaltbefehls bei dem Submodul 31, dessen Kondensatorspannung Ud1 zu klein bzw. kleiner als die Kondensatorspannung Ud2 ist, bezüglich des ersten Schalters S11 zeitverzögert. So lässt sich in der Figur 4 erkennen, dass bei dem Submodul 31 das Umschalten lediglich bezüglich des zweiten Schalters S12 innerhalb der Verzögerungszeit $\Delta T1$ durchgeführt wird. Der Einschaltbefehl für das Einschalten des ersten Schalters S11 erfolgt hingegen demgegenüber verzögert, nämlich erst nach Ablauf einer Verriegelungsphase Tv. Die Länge der Verriegelungsphase Tv ist vorzugsweise umso größer, je größer die Abweichung der Kondensatorspannungen Ud1 und Ud2 voneinander ist. Es gilt vorzugsweise:

$$Tv = k * (Ud1 - Ud2),$$

wobei k einen Proportionalitätsfaktor bezeichnet.

In der Verriegelungsphase Tv sind bei dem Submodul 31 somit beide Schalter S11 und S12 ausgeschaltet.

Bezüglich des Submoduls 32 verändert die Steuereinrichtung 33 das Umschalten der beiden Schalter S21 und S22 nicht; dies bedeutet, dass nach Ablauf der Verzögerungszeit $\Delta T1$ das gewünschte Umschalten der beiden Schalter erfolgt, wie dies durch die multimodulindividuellen Steuersignale T1 und T2 zum Zeitpunkt t0 vorgegeben wird.

Geht zum Zeitpunkt t1 ein weiterer Umschaltbefehl in Form eines Flankenwechsels der Steuersignale T1 und T2 bei der Steuereinrichtung 33 ein, so wird der erste Schalter S11 des Submoduls 31 vorzugsweise vor dem zweiten Schalter S12 umgeschaltet, nämlich um eine Zeitspanne früher, die der zeitlichen Länge der Verriegelungsphase Tv bei dem vorherigen Einschalten entspricht. Um eine solche Symmetrierung des Signalverlaufs des Steuersignals T11 gegenüber dem Steuersignal T12 zu erreichen, erfolgt das Umschalten des ersten Schalters S11 vorzugsweise nach einer Zeitspanne Ta nach Eingang des Flankenwechsels der Steuersignale T1 und T2 zum Zeitpunkt t1, wobei gilt:

$$Ta = \Delta T1 - Tv$$

Die drei anderen Schalter, also der zweite Schalter S12 des Submoduls 31 sowie die beiden Schalter S21 und S22 des Submoduls 32 gemäß Figur 2 werden entsprechend den Vorgaben der modulindividuellen Steuersignale T1 und T2 nach Ablauf der Verzögerungszeit ∆T1 umgeschaltet, wie dies auch bei dem Fall einer symmetrischen Verteilung der Kondensatorspannungen der Fall ist und im Zusammenhang mit der Figur 3 erläutert wurde.

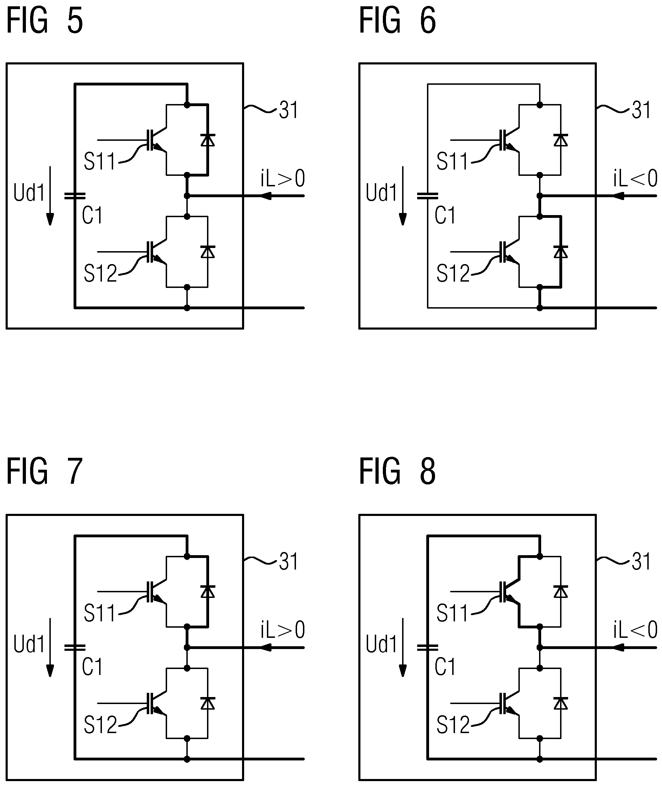

Die Funktion der Verriegelungsphasen Tv wird nachfolgend anhand des Submoduls 31 näher erläutert: Die Figur 5 zeigt die Arbeitsweise des Submoduls 31 im Falle einer zu kleinen Kondensatorspannung Ud1 bzw. während aus diesem Grunde vorgesehener Verrieglungsphasen Tv (vgl. Figur 4). Die Figur 5 visualisiert dabei den Stromfluss iL mittels besonders dicker Linien während der Verriegelungsphasen Tv für den Fall eines positiven Stroms iL (iL > 0). Man erkennt, dass der Kondensator C1 aufgeladen wird und dessen Kondensatorspannung Ud1 ansteigt.

Die Figur 6 zeigt die Arbeitsweise des Submoduls 31 während der Verriegelungsphasen Tv (vgl. Figur 4) für den Fall eines negativen Stroms iL (iL < 0). Im Falle eines negativen Stroms iL bleibt die Kondensatorspannung Ud1 des Kondensators C1 unverändert, weil der Strom iL an dem Kondensator C1 vorbeifließt.

Die Figur 7 zeigt zum Vergleich die Arbeitsweise des Submoduls 31 für den Fall eines positiven Stroms iL (iL > 0) während der "normalen" Einschaltzeit des ersten Schalters S11 des Submoduls 31. Es lässt sich erkennen, dass der Kondensator C1 des Submoduls 31 in dieser Zeitspanne aufgeladen wird.

Die Figur 8 zeigt zum Vergleich die Arbeitsweise des Submoduls 31 für den Fall eines negativen Stroms il (iL < 0) während der "normalen" Einschaltzeit des ersten Schalters S11. Es lässt sich erkennen, dass der Kondensator C1 des Submoduls 31 entladen wird.

Zusammengefasst wird also während der "normalen" Einschaltzeit des ersten Schalters S11 des Submoduls 31 der Kondensator C1 je nach Stromrichtung des Modulstroms iL aufgeladen oder entladen. In der Verriegelungsphase Tv hingegen kann es nur zu einem Aufladen des Kondensators C1 kommen, nämlich während eines positiven Stromes iL; ein Entladen des Kondensators C1 ist hingegen blockiert. Durch dieses Blockieren wird sich die Zwischenkreisspannung des Submoduls 31 bzw. die Kondensatorspannung Ud1 des Kondensators C1 während den Verriegelungsphasen Tv (vgl. Figur 4) gegenüber der Zwischenkreisspannung des Submoduls 32 bzw. der Kondensatorspannung Ud2 des Kondensators C2 erhöhen und es kommt zu einer Angleichung der Kondensatorspannungen Ud1 und Ud2.

Der Multilevelumrichter 10 gemäß Figur 1 bzw. das Multimodul 30 gemäß Figur 2 wird also zusammenfassend vorzugsweise wie folgt betrieben:

- Die Symmetrierung der Teilzwischenkreisspannungen der einzelnen Submodule 30 und 31 erfolgt vorzugsweise durch eine variable Verriegelungsphase Tv zwischen den Schaltern der jeweiligen Submodule. Während der Verriegelungsphasen Tv sind jeweils beide Schalter des jeweils verriegelten Submoduls ausgeschaltet.

- Während der Verriegelungsphasen wird jeweils je nach Stromrichtung des durch das Submodul fließenden Stroms entweder der Kondensator des Submoduls aufgeladen (im Falle eines positiven Stroms iL > 0) oder die Zwischenkreisspannung bleibt unverändert.

- Vorzugsweise werden Verriegelungsphasen jeweils vor und nach der jeweiligen Einschaltzeit des ersten Schalters des zu verriegelnden Submoduls vorgesehen, und zwar symmetrisch derart, dass die Einschaltzeit des ersten Schalters des Submoduls zeitlich symmetrisch zur Ausschaltzeit des zweiten Schalters liegt. Im Falle einer solchen Symmetrierung lässt sich erreichen, dass die Mittelachse der Ausgangsspannungspulse bestehen bleibt.

Die Arbeitsweise von Multimodulen wurde im Zusammenhang mit den Figuren 2 bis 8 beispielhaft für den Fall erläutert, dass das Multimodul zwei Submodule aufweist. In entsprechender Weise kann ein Ansteuern der Submodule erfolgen, wenn das Multimodul mehr als zwei Submodule aufweist. In einem solchen Fall wird es als vorteilhaft angesehen, wenn für jedes Submodul, welches eine kleinere Zwischenspannung als der Mittelwert der Zwischenkreisspannungen der Submodule dieses Multimoduls aufweist, Verriegelungsphasen vorgesehen werden, in denen die seitens der Zentraleinrichtung geforderte Einschaltzeit des ersten Schalters des jeweiligen Submoduls verkürzt wird und beide Schalter des Submoduls ausgeschaltet sind. Für einen negativen Modulstrom iL < 0 wird während der Verriegelungsphase dadurch der Zustand "Zwischenkreis entladen", der während der "normalen" Einschaltzeit des ersten Schalters auftreten würde, durch den Zustand "Zwischenkreisspannung unverändert" ersetzt. Durch die Verriegelungsphasen lässt sich somit erreichen, dass die Zwischenkreisspannungen der verriegelten Submodule gegenüber den Zwischenkreisspannung der anderen, nicht verriegelten Submodule im Laufe einer Periode der Grundfrequenz ansteigt.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

10 Multilevelumrichter
20 Zentraleinrichtung
30 Multimodul
31 Submodul
31a Modulanschluss

31b Modulanschluss
32 Submodul
32a Modulanschluss
32b Modulanschluss
33 Steuereinrichtung
34a Steuerleitung
34b Steuerleitung
34c Steuerleitung
34d Steuerleitung
C Kondensator
C1 Kondensator
C2 Kondensator
D Induktivität
G10 Gleichspannungsseite
G10a Spannungsanschluss
G10b Spannungsanschluss
iL Stromfluss
R1 Reihenschaltung
R11 äußerer Anschluss der Reihenschaltung R1
R12 äußerer Anschluss der Reihenschaltung R1
R2 Reihenschaltung
R21 äußerer Anschluss der Reihenschaltung R2
R22 äußerer Anschluss der Reihenschaltung R2
R3 Reihenschaltung
R31 äußerer Anschluss der Reihenschaltung R3
R32 äußerer Anschluss der Reihenschaltung R3
S1 Schalter
S11 Schalter
S12 Schalter
S2 Schalter
S21 Schalter
S22 Schalter
t0 Zeitpunkt
t1 Zeitpunkt
T Submodul
T1 Steuersignal
T11 Steuersignal
T12 Steuersignal
T2 Steuersignal
T21 Steuersignal
T22 Steuersignal
Ta Zeitspanne
Tv Verriegelungsphase
Ud1 Kondensatorspannung
Ud2 Kondensatorspannung
W10 Wechselspannungsanschluss
Z Zwischenanschluss
ΔT1 Verzögerungszeit

**Patentansprüche**

1.  Multilevelumrichter (10) mit einer Mehrzahl an in Reihe geschalteten Submodulen (31, 32), die jeweils einen ersten Schalter (S11, S21), einen zweiten Schalter (S12, S22) und einen Kondensator (C1, C2) aufweisen und in Entladephasen mittels des Kondensators Strom nach außen abgeben und in Ladephasen Strom zum Aufladen des Kondensators aufnehmen, und einer Zentraleinrichtung (20) zur Steuerung der Arbeitsweise des Multilevelumrichters (10),
**dadurch gekennzeichnet, dass**

- mindestens zwei der Submodule (31, 32) unter Bildung eines Multimoduls (30) in Reihe geschaltet sind, wobei in den Ladephasen und den Entladephasen des Multimoduls (30) jeweils einer der Schalter eines jeden Submoduls (31, 32) ausgeschaltet und der jeweils andere Schalter eines jeden Submoduls (31, 32) eingeschaltet ist, und

- das Multimodul (30) eine mit der Zentraleinrichtung (20) in Verbindung stehende Steuereinrichtung (33) aufweist, die die Steuerung der Submodule (31, 32) des Multimoduls (30) gemäß Steuersignalen (T1, T2) der Zentraleinrichtung (20) vornimmt,

- wobei die Steuereinrichtung (33) derart ausgestaltet ist, dass sie die Kondensatorspannungen der Submodule (31, 32) überwacht und im Falle einer Asymmetrie der Kondensatorspannungen eine Symmetrierung, unabhängig von der Stromrichtung des Modulstromes, dadurch hervorruft, dass sie bei Submodulen (31) mit einer - verglichen mit der Kondensatorspannung der übrigen Submodule (32) des Multimoduls (30) - zu geringen Kondensatorspannung jeweils mindestens eine Verriegelungsphase (Tv) vorsieht, in der der erste und der zweite Schalter (S11, S12) gleichzeitig abgeschaltet sind, wobei die Steuereinrichtung die zeitliche Länge der Verriegelungsphase (Tv) submodulindividuell in Abhängigkeit von der Asymmetrie der Kondensatorspannungen festlegt.

2.  Multilevelumrichter (10) nach einem der voranstehenden Ansprüche,
    **dadurch gekennzeichnet, dass** die Steuereinrichtung (33) für jedes Submodul (31, 32) die Abweichung der Kondensatorspannung von dem Mittelwert der Kondensatorspannungen der Submodule (31, 32) des Multimoduls (30) ermittelt und im Falle, dass die Abweichung einen vorgegebenen Schwellenwert überschreitet, für das jeweilige Submodul (30) jeweils mindestens eine Verriegelungsphase (Tv) vorsieht.

3.  Multilevelumrichter (10) nach einem der voranstehenden Ansprüche,
    **dadurch gekennzeichnet, dass** die Steuereinrichtung (33) für jedes Submodul (31, 32) die Abweichung der Kondensatorspannung von dem Mittelwert der Kondensatorspannungen der Submodule (31, 32) ermittelt und die zeitliche Länge der Verriegelungsphasen (Tv) submodulindividuell in Abhängigkeit von der jeweiligen Abweichung der Kondensatorspannung vom Mittelwert festlegt, wobei die jeweilige zeitliche Länge der Verriegelungsphasen (Tv) umso größer ist, je größer die jeweilige Abweichung der Kondensatorspannung vom Mittelwert ist.

4. Multilevelumrichter (10) nach einem der vorstehenden Ansprüche,
**dadurch gekennzeichnet, dass** die Steuereinrichtung (33) derart ausgestaltet ist, dass sie Verriegelungsphasen (Tv) jeweils dann auslöst, wenn sie von der Zentraleinrichtung (20) ein Steuersignal zum Umschalten des ersten und des zweiten Schalters der Submodule (31, 32) erhält.

5. Multilevelumrichter (10) nach einem der vorstehenden Ansprüche,
**dadurch gekennzeichnet, dass** der erste Schalter (S11, S21) eines jeden Submoduls (31, 32) mit dem Kondensator (C1, C2) in Reihe geschaltet ist und der zweite Schalter (S12, S22) elektrisch parallel zu der Reihenschaltung aus Kondensator (C1, C2) und erstem Schalter (S11, S21) liegt.

6. Multilevelumrichter (10) nach einem der vorstehenden Ansprüche,
**dadurch gekennzeichnet, dass** die Steuereinrichtung (33) derart ausgestaltet ist, dass sie die Verriegelungsphasen (Tv) jeweils einfügt, wenn der zweite Schalter (S12, S22) ausgeschaltet ist oder gemäß Steuersignal der Zentraleinrichtung (20) ausgeschaltet werden soll, und das Einfügen der Verriegelungsphasen (Tv) auf Kosten der Einschaltzeit des ersten Schalters (S11, S21) durchgeführt wird.

7. Multilevelumrichter (10) nach einem der vorstehenden Ansprüche,
**dadurch gekennzeichnet, dass** parallel zu dem ersten Schalter (S11, S21) eine erste Diode und parallel zu dem zweiten Schalter (S12, S22) eine zweite Diode geschaltet ist.

8. Multilevelumrichter (10) nach einem der vorstehenden Ansprüche,
**dadurch gekennzeichnet, dass** parallel zu dem Kondensator eine Reihenschaltung geschaltet ist, die eine erste und eine zweite Diode umfasst.

9. Multilevelumrichter (10) nach einem der vorstehenden Ansprüche,
**dadurch gekennzeichnet, dass**

- der Anodenanschluss der ersten Diode mit dem Kathodenanschluss der zweiten Diode verbunden ist und
- der Kathodenanschluss der ersten Diode mit einem Kondensatoranschluss des Kondensators und der Anodenanschluss der zweiten Diode mit dem anderen Kondensatoranschluss des Kondensators verbunden ist.

10. Verfahren zum Betreiben eines Multilevelumrichters (10) mit einer Mehrzahl an in Reihe geschalteten Submodulen (31, 32), die jeweils einen ersten Schalter (S11, S21), einen zweiten Schalter (S12, S22) und einen Kondensator (C1, C2) aufweisen und in Entladephasen mittels des Kondensators Strom nach außen abgeben und in Ladephasen Strom zum Aufladen des Kondensators aufnehmen,
**dadurch gekennzeichnet, dass**

- mindestens zwei der Submodule (31, 32) unter Bildung eines Multimoduls (30) in Reihe geschaltet werden, wobei in den Ladephasen und den Entladephasen des Multimoduls (30) jeweils einer der Schalter eines jeden Submoduls (30) ausgeschaltet und der jeweils andere Schalter eines jeden Submoduls (30) eingeschaltet wird, und
- die Kondensatorspannungen der Submodule (30) überwacht werden und im Falle einer Asymmetrie der Kondensatorspannungen eine Symmetrierung, unabhängig von der Stromrichtung des Modulstromes, hervorgerufen wird, indem bei Submodulen (31) mit einer - verglichen mit der Kondensatorspannung der übrigen Submodule (32) des Multimoduls (30) - zu geringen Kondensatorspannung jeweils mindestens eine Verriegelungsphase (Tv) vorgesehen wird, in der der erste (S11) und der zweite (S12) Schalter gleichzeitig ausgeschaltet werden, wobei die Steuereinrichtung die zeitliche Länge der Verriegelungsphase (Tv) submodulindividuell in Abhängigkeit von der Asymmetrie der Kondensatorspannungen festlegt.

11. Verfahren nach Anspruch 10, **dadurch gekennzeichnet, dass** die Verkürzung der Einschaltzeit des ersten Schalters (S11) symmetrisch zur zeitlichen Lage der Ausschaltzeit des zweiten Schalters (S12) erfolgt.

12. Verfahren nach Anspruch 10 oder 11, **dadurch gekennzeichnet, dass**

- bei Submodulen (31) mit einer - verglichen mit der Kondensatorspannung der übrigen Submodule (32) des Multimoduls (30) - zu geringen Kondensatorspannung jeweils zwei Verriegelungsphasen (Tv) vorgesehen werden, in der der erste und der zweite Schalter gleichzeitig ausgeschaltet sind,
- wobei die beiden Verriegelungsphasen (Tv) gleich lang sind und eine der Verriegelungsphasen (Tv) in dem Zeitintervall nach dem Ausschalten des zweiten Schalters (S12) und vor dem Einschalten des ersten Schalters (S11) liegt und die andere Verriegelungsphase (Tv) in dem Zeitintervall nach dem Wiederausschalten des ersten Schalters (S11) und vor dem Wiedereinschalten des zweiten Schalters (S12) liegt.

**Claims**

1. Multilevel converter (10) having a plurality of series-connected submodules (31, 32), each of which comprises a first switch (S11, S21), a second switch (S12, S22) and a capacitor (C1, C2), and, in discharge phases, gives out current by means of the capacitor, and, in charging phases, draws in current for charging the capacitor, and having a central device (20) for controlling the operation of Multilevel converter (10),
**characterized in that**

   - at least two of the submodules (31, 32) are connected in series to form a multimodule (30), wherein in the charging phases and the discharge phases of the multimodule (30), one of the switches of each submodule (31, 32) is off and the other switch of each submodule (31, 32) is on, and
   - the multimodule (30) comprises a control device (33) connected to the central device (20), which control device controls the submodules (31, 32) of the multimodule (30) on the basis of control signals (T1, T2) from the central device (20),
   - wherein the control device (33) is designed such that it monitors the capacitor voltages of the submodules (31, 32) and, in the event of an imbalance in the capacitor voltages, produces balancing, irrespective of the direction of flow of the module current, by providing at least one blocking period (Tv) for each submodule (31) that has a capacitor voltage that is too low compared with the capacitor voltage of the other submodules (32) of the multimodule (30), in which blocking period the first switch and the second switch (S11, S12) are off at the same time, wherein the control device defines the time length of the blocking period (Tv) specifically for each submodule on the basis of the imbalance in the capacitor voltages.

2. Multilevel converter (10) according to either of the previous claims,
**characterized in that**
the control device (33) determines for each submodule (31, 32) the difference between the capacitor voltage and the mean value of the capacitor voltages of the submodules (31, 32) of the multimodule (30), and, if the difference exceeds a predetermined threshold value, provides at least one blocking period (Tv) for each of the submodules (30) concerned.

3. Multilevel converter (10) according to any of the previous claims,
**characterized in that**
the control device (33) determines for each submodule (31, 32) the difference between the capacitor voltage and the mean value of the capacitor voltages of the submodules (31, 32), and defines the time length of the blocking periods (Tv) specifically for each submodule on the basis of the difference for that submodule between the capacitor voltage and the mean value, where the larger said difference between the capacitor voltage and the mean value is, the greater the associated time length of the blocking periods (Tv).

4. Multilevel converter (10) according to any of the previous claims,
**characterized in that**
the control device (33) is designed such that it actuates blocking periods (Tv) in each case when it receives from the central device (20) a control signal for switching the first switch and the second switch of the submodules (31, 32).

5. Multilevel converter (10) according to any of the previous claims,
**characterized in that**
the first switch (S11, S21) of each submodule (31, 32) is connected in series with the capacitor (C1, C2), and the second switch (S12, S22) is electrically in parallel with the series circuit comprising capacitor (C1, C2) and first switch (S11, S21).

6. Multilevel converter (10) according to any of the previous claims,
**characterized in that**
the control device (33) is designed such that it inserts the blocking periods (Tv) in each case when the second switch (S12, S22) is off or, on the basis of the control signal from the central device (20), is meant to be switched off, and the blocking periods (Tv) are inserted at the expense of the on-period of the first switch (S11, S21).

7. Multilevel converter (10) according to any of the previous claims,
**characterized in that**
a first diode is connected in parallel with the first switch (S11, S21), and a second diode in parallel with the second switch (S12, S22).

8. Multilevel converter (10) according to any of the previous claims,
**characterized in that**

a series circuit comprising a first diode and a second diode is connected in parallel with the capacitor.

9. Multilevel converter (10) according to any of the previous claims, **characterized in that**

- the anode terminal of the first diode is connected to the cathode terminal of the second diode, and
- the cathode terminal of the first diode is connected to a capacitor terminal of the capacitor, and the anode terminal of the second diode is connected to the other capacitor terminal of the capacitor.

10. Method for operating a multilevel converter (10) having a plurality of series-connected submodules (31, 32), each of which comprises a first switch (S11, S21), a second switch (S12, S22) and a capacitor (C1, C2), and, in discharge phases, gives out current by means of the capacitor, and, in charging phases, draws in current for charging the capacitor, **characterized in that**

- at least two of the submodules (31, 32) are connected in series to form a multimodule (30), wherein in the charging phases and the discharge phases of the multimodule (30), one of the switches of each submodule (30) is off and the other switch of each submodule (30) is on, and
- the capacitor voltages of the submodules (30) are monitored and, in the event of an imbalance in the capacitor voltages, balancing is produced, irrespective of the direction of flow of the module current, by providing at least one blocking period (Tv) for each submodule (31) that has a capacitor voltage that is too low compared with the capacitor voltage of the other submodules (32) of the multimodule (30), in which blocking period the first switch (S11) and the second switch (S12) are off at the same time, wherein the control device defines the time length of the blocking period $(T_v)$ specifically for each submodule on the basis of the imbalance in the capacitor voltages.

11. Method according to Claim 10, **characterized in that** the on-period of the first switch (S11) is made shorter symmetrically with respect to the position in time of the off-period of the second switch (S12).

12. Method according to either Claim 10 or Claim 11, **characterized in that**

- two blocking periods (Tv) are provided for each submodule (31) that has a capacitor voltage that is too low compared with the capacitor voltage of the other submodules (32) of the multimodule (30), in which blocking period the first switch and the second switch are off at the same time,
- wherein the two blocking periods (Tv) are of equal length and one of the blocking periods (Tv) lies in the time interval after the second switch (S12) is switched off and before the first switch (S11) is switched on, and the other blocking period (Tv) lies in the time interval after the first switch (S11) is switched off again and before the second switch (S12) is switched on again.

## Revendications

1. Convertisseur (10) à plusieurs niveaux, comprenant une pluralité de sous-modules (31, 32), qui sont montés en série et qui ont chacun un premier interrupteur (S11, S21), un deuxième interrupteur (S12, S22) et un condensateur (C1, C2), et qui, dans des phases de décharge, cèdent à l'extérieur du courant au moyen du condensateur et, dans des phases de charge, absorbent du courant pour charger le condensateur, et un dispositif (20) central de commande du mode de fonctionnement du convertisseur (10) à plusieurs niveaux, **caractérisé en ce que**

- au moins deux des sous-modules (31, 32) sont montés en série en formant un multi-module (30), dans lequel, dans les phases de charge et dans les phases de décharge du multi-module (30), respectivement, l'un des interrupteurs de l'un de chaque sous-module (31, 32) est ouvert et l'autre interrupteur de l'un de chaque sous-module (31, 32) est fermé et
- le multi-module (30) a un dispositif (33) de commande, qui est en liaison avec le dispositif (20) central et qui effectue la commande des sous-modules (31, 32) du multi-module (30) suivant des signaux (T1, T2) de commande du dispositif (20) central,
- dans lequel le dispositif (33) de commande est conformé de manière à contrôler les tensions de condensateur des sous-modules (31, 32) et à provoquer, dans le cas d'une dissymétrie des tensions de condensateur, une symétrisation indépendamment du sens du courant du module par le fait qu'il prévoit, pour des sous-modules (31) ayant une tension de condensateur trop basse - par rapport à la tension de condensateur des autres sous-modules (32) du multimodule (30) - respectivement au moins une phase de (Tv) de verrouillage, dans laquelle le premier et le deuxième interrupteurs (S11, S12) sont ouverts en même temps, le dispositif de commande fixant la longueur de temps de la phase (Tv) de verrouillage, individuellement par sous-module, en fonction de la dissymétrie des tensions de condensateur.

2. Convertisseur (10) à plusieurs niveaux suivant l'une des revendications précédentes, **caractérisé en ce que** le dispositif (33) de commande détermine, pour chaque sous-module (31, 32), l'écart de la tension de condensateur à la valeur moyenne des tensions de condensateur des sous-modules (31, 32) du multi-module (30) et, dans le cas où l'écart dépasse une valeur de seuil donnée à l'avance, prévoit, pour le sous-module (30) respectif, respectivement au moins une phase (Tv) de verrouillage.

3. Convertisseur (10) à plusieurs niveaux suivant l'une des revendications précédentes, **caractérisé en ce que** le dispositif (33) de commande détermine, pour chaque sous-module (31, 32), l'écart de la tension de condensateur à la valeur moyenne des tensions de condensateur des sous-modules (31, 32), et fixe la longueur de temps des phases (Tv) de verrouillage individuellement par sous-module en fonction de l'écart respectif de la tension de condensateur à la valeur moyenne, la longueur de temps respective des phases (Tv) de verrouillage étant d'autant plus grandes que l'écart de la tension de condensateur à la valeur moyenne est plus grand.

4. Convertisseur (10) à plusieurs niveaux suivant l'une des revendications précédentes, **caractérisé en ce que** le dispositif (33) de commande est conformé de manière à déclencher des phases (Tv) de verrouillage, lorsqu'il reçoit, du dispositif (20) central, un signal de commande pour commuter le premier et le deuxième interrupteurs des sous-modules (31, 32).

5. Convertisseur (10) à plusieurs niveaux suivant l'une des revendications précédentes, **caractérisé en ce que** le premier interrupteur (S11, S21) de l'un de chaque sous-module (31, 32) est monté en série avec le condensateur (C1, C2) et le deuxième interrupteur (S12, S22) est en parallèle électriquement avec le circuit série du condensateur (C1, C2) et du premier interrupteur (S11, S21).

6. Convertisseur (10) à plusieurs niveaux suivant l'une des revendications précédentes, **caractérisé en ce que** le dispositif (33) de commande est conformé de manière à insérer les phases (Tv) de verrouillage, lorsque le deuxième interrupteur (S12, S22) est ouvert ou doit être ouvert suivant un signal de commande du dispositif (20) central, et l'insertion des phases (Tv) de verrouillage s'effectue au détriment du temps de fermeture du premier interrupteur (S11, S21).

7. Convertisseur (10) à plusieurs niveaux suivant l'une des revendications précédentes, **caractérisé en ce que** une première diode est montée en parallèle au premier interrupteur (S11, S21) et une deuxième diode est montée en parallèle au deuxième interrupteur (S12, S22).

8. Convertisseur (10) à plusieurs niveaux suivant l'une des revendications précédentes, **caractérisé en ce que** un circuit série, qui comprend la première et la deuxième diodes, est monté en parallèle au condensateur.

9. Convertisseur (10) à plusieurs niveaux suivant l'une des revendications précédentes, **caractérisé en ce que**

   - la borne d'anode de la première diode est reliée à la borne de cathode de la deuxième diode et
   - la borne de cathode de la première diode est reliée à une borne du condensateur et la borne d'anode de la deuxième diode est reliée à l'autre borne du condensateur.

10. Procédé pour faire fonctionner un convertisseur (10) à plusieurs niveaux, comprenant une pluralité de sous-modules (31, 32), qui sont montés en série et qui ont chacun un premier interrupteur (S11, S21), un deuxième interrupteur (S12, S22) et un condensateur (C1, C2), et qui, dans des phases de décharge, cèdent à l'extérieur du courant au moyen du condensateur et dans des phases de charge absorbent du courant pour charger le condensateur, **caractérisé en ce que**

   - on monte en série au moins deux des sous-modules (31, 32) en formant un multi-module (30), dans lequel, dans les phases de charge et dans les phases de décharge du multi-module (30), on ouvre respectivement l'un des interrupteurs de l'un de chaque sous-module (30) et l'on ferme respectivement l'autre interrupteur de l'un de chaque sous-module (30) et
   - on contrôle les tensions de condensateur des sous-modules (30) et, dans le cas d'une dissymétrie des tensions de condensateur, on provoque une symétrisation indépendamment du sens du courant du module, en prévoyant, pour des sous-modules (31) ayant une tension de condensateur trop basse - par rapport à la tension de condensateur des autres sous-modules (32) du multi-module (30) - respectivement au moins une phase (Tv) de verrouillage, dans laquelle on ouvre en même temps le premier (S11) et le deuxième (S12) interrupteurs, le dispositif de commande fixant la longueur dans le temps de la phase (Tv) de verrouillage, individuellement par sous-module, en fonction de la dissymétrie des tensions de condensateur.

11. Procédé suivant la revendication 10, **caractérisé en ce que** le raccourcissement du temps de fermeture du premier interrupteur (S11) s'effectue symétriquement à la position dans le temps du temps d'ouverture du deuxième interrupteur (S12).

12. Procédé suivant la revendication 10 ou 11, **caractérisé en ce que**

- pour des sous-modules (31) ayant une tension de condensateur trop basse - par rapport à la tension de condensateur des autres sous-modules (32) du multi-module (30) -, on prévoit respectivement deux phases (Tv) de verrouillage, dans lesquelles le premier et le deuxième interrupteurs sont ouverts en même temps,
- dans lequel les deux phases (Tv) de verrouillage sont de même longueur et l'une des phases (Tv) de verrouillage se trouve dans l'intervalle de temps après l'ouverture du deuxième interrupteur (S12) et avant la fermeture du premier interrupteur (S11), et l'autre phase (Tv) de verrouillage se trouve dans l'intervalle de temps après la réouverture du premier interrupteur (S11) et avant la refermeture du deuxième interrupteur (S12).

FIG 1

# FIG 2

FIG 3

EP 3 011 673 B1

FIG 4

FIG 5

FIG 6

FIG 7

FIG 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Modulares Stromrichterkonzept für Netzkupplungsanwendungen bei hohen Spannungen. **RAINER MARQUARDT ; ANTON LESNICAR ; JÜRGEN HILDINGER.** ETG Fachtagung Bauelemente der Leistungselektronik und ihre Anwendungen. Institut für elektrische Antriebstechnik, Leistungselektronik und Steuerungen der Universität der Bundeswehr München, 2002

- **K. MARQUARDT et al.** Modulares Stromrichterkonzept für Netzkupplungsanwendungen bei hohen Spannungen. *Vorträge der ETG-Fachtagung,* 2002
- **BALAUDINO DE ALVARENGA et al.** Modulation Strategy for Minimizing Commutations and Capacitor Voltage Balancing in Symmetrical Cascaded Multilevel Converters. IEEE, 2011